# EUROPÄISCHE PATENTSCHRIFT

(11) **EP 2 503 175 B1**
(45) Veröffentlichungstag und Bekanntmachung des Hinweises auf die Patenterteilung: **19.08.2015**
(21) Anmeldenummer: 12160918.4
(22) Anmeldetag: 23.03.2012
(51) Int. Cl.: F16D 55/227, F16D 65/56, F16D 65/18

(54) **Scheibenbremse**
Disc brake
Frein à disque

(30) Priorität: 24.03.2011 DE 102011014916
(43) Veröffentlichungstag der Anmeldung: 26.09.2012
(73) Patentinhaber: KNORR-BREMSE Systeme für Nutzfahrzeuge GmbH, 80809 München (DE)
(72) Erfinder: Hidringer, Michael, 94544 Hofkirchen (DE)
(74) Vertreter: Mattusch, Gundula

(56) Entgegenhaltungen:
- WO-A1-01/75324
- DE-U1-202010 003 738

## Beschreibung

Die Erfindung betrifft eine Scheibenbremse nach dem Oberbegriff des Anspruchs 1.

Eine solche Scheibenbremse, die als Schiebesattel-Scheibenbremse ausgebildet sein kann und pneumatisch oder elektromechanisch betätigbar ist, ist aus der DE 94 22 342 U1 bekannt.

Zur Zuspannung ist ein Bremshebel mit einem als Exzenter ausgeformten Endbereich einerseits am Bremssattel und andererseits an einer Brücke gelagert, mit der darin gehaltene, Druckstücke tragende Stellspindeln bei einer Betätigung des Bremshebels gegen einen zuspannseitigen Bremsbelag pressbar sind.

Die Stellspindeln, die beidseitig des Bremshebels angeordnet sind, also parallel und abständig zueinander verlaufend, sind zugleich Bestandteil einer Nachstelleinrichtung, mit der eine automatische Verschleißnachstellung derart erfolgt, dass das sogenannte Lüftspiel, mit dem der Spalt zwischen den Bremsbelägen und der Bremsscheibe im unbetätigten Zustand bezeichnet ist, unabhängig vom Verschleißzustand und Verschleißverhalten der Bremsbeläge konstant gehalten wird.

Dabei sind die Stellspindeln als Gewinderohre ausgebildet und verdrehbar in der Brücke gelagert, wobei der Antrieb zum Lüftspielausgleich über innen liegende Nachsteller erfolgt, von denen einer über ein Antriebselement, z.B. einen Schaltfinger oder ein Zahnrad, vom Bremshebel angetrieben wird.

Zur synchronen Verstellung der Stellspindeln sind Transmissionsmittel vorgesehen, beispielsweise eine Kette, die auf Kettenrädern geführt ist, die verdrehsicher an den Nachstellern befestigt sind.

Allerdings sind zur Realisierung der Nachstelleinrichtung eine Vielzahl konstruktiv aufwändiger Bauteile erforderlich, die nur mit entsprechend hohem Fertigungs- und Montageaufwand zur Funktion bringbar sind.

Darüber hinaus bedingt der Einbau der bekannten Nachstelleinrichtung einen erheblichen Bauraum, nicht zuletzt durch die Einrichtung zur synchronen Verstellung der Stellspindeln. Dies steht der stetigen Forderung nach einer Bauraumminimierung sowie einer Gewichtsreduzierung der Scheibenbremse insgesamt entgegen.

Naturgemäß erhöht die Anzahl an Bauteilen die Störanfälligkeit eines Systems, so dass hierzu die Forderung besteht, eine bauteiloptimierte Scheibenbremse zu schaffen.

In der DE 20 2010 003738 U1 sowie der WO 01/75324 A1 ist jeweils eine Scheibenbremse geoffenbart, bei der die Nachstelleinrichtung zu einem überwiegenden Teil in einer Druckplatte angeordnet ist, während der Bremshebel sich an einer Brückenplatte abstützt. Dabei wirken auf die Nachstelleinrichtung mit einer Gewindehülse beim Bremsen Querkräfte ein, so dass diese Gewindehülse, ebenso wie die Druckplatte entsprechend dimensioniert sind.

Der Erfindung liegt die Aufgabe zugrunde, eine Scheibenbremse der gattungsgemäßen Art so weiterzuentwickeln, dass sie konstruktiv einfachst aufgebaut und kostengünstiger herstellbar ist und ihre Standzeit erhöht wird.

Diese Aufgabe wird durch eine Scheibenbremse mit den Merkmalen des Anspruchs 1 gelöst.

Durch diese konstruktive Ausbildung der Scheibenbremse ergeben sich eine ganze Reihe bemerkenswerter Vorteile. So ist zunächst die außerordentlich einfache Herstellung hervorzuheben. Z. B. kann auf eine Synchronisiereinrichtung verzichtet werden, da der Lüftspielausgleich ausschließlich durch das vorzugsweise zentral angeordnete Verstellelement erfolgt. D.h., Stellspindeln in der bisherigen Anordnung, also beidseitig des Bremshebels, entfallen. Stattdessen kommen dort Führungsholme zum Einsatz, die zum einen fest mit der Druckplatte verbunden und zum anderen verschiebbar in der Brückenplatte gehalten sind.

Das Verstellelement kann spindelförmig im Sinne der bekannten Stellspindel ausgebildet sein, d.h., aus einem Gewinderohr bestehen, in dem innenseitig der Nachsteller verdrehsicher und verschiebefest gehalten ist, der mit dem Bremshebel in der bekannten Art über Schaltfinger, ein Zahnrad oder dergleichen korrespondiert.

Daneben ist die Bearbeitung des Bremssattels optimiert, da lediglich noch eine Montageöffnung für den Nachsteller erforderlich ist, woraus sich eine Vereinfachung der Gestaltung einer Deckeleinheit ergibt, mit der die Nachstelleinrichtung nach außen hin verschlossen ist.

Sowohl die Brückenplatte wie auch die Druckplatte sind als einfache Bauteile herzustellen, wobei die Brückenplatte Widerlagerstellen zur Anlage des Bremshebels aufweist.

Die Erfindung schafft überdies die Voraussetzung, um die innere Mechanik in Modulbauweise auszuführen. Hierdurch wird ein einfacher Austausch des Moduls auch im Feld möglich. Mit dem Hinweis auf die Verstellung der Synchronisation war dies bislang untersagt.

Zweckmäßigerweise ist der Bremssattel so gestaltet, dass er für die zur Brückenplatte relativ verschiebbare Druckplatte seitliche Führungsbahnen bildet, um so eine seitliche Fixierung zu sichern.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:

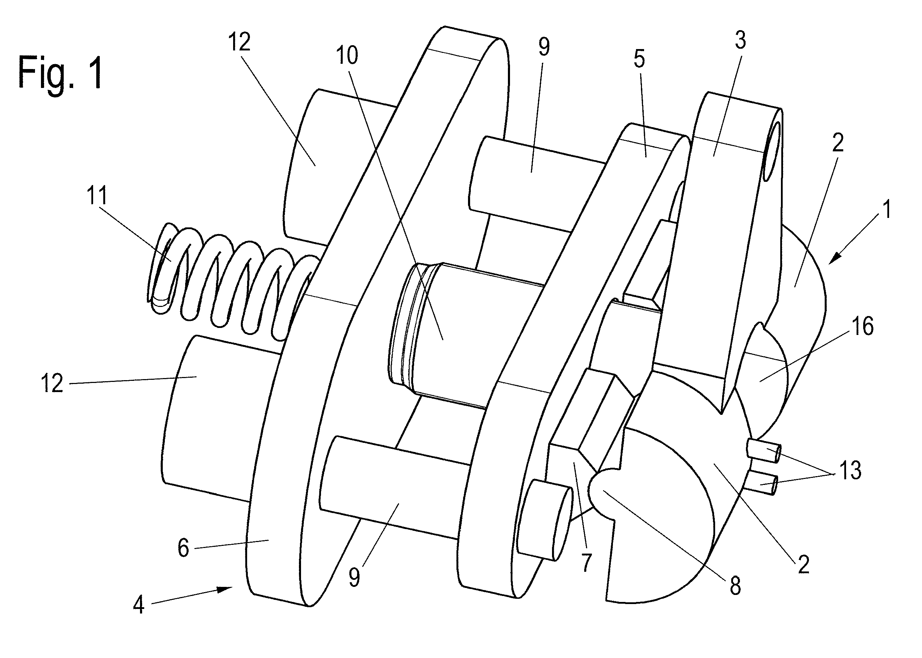

- Figur 1: einen Teil einer erfindungsgemäßen Scheibenbremse in einer perspektivischen Ansicht

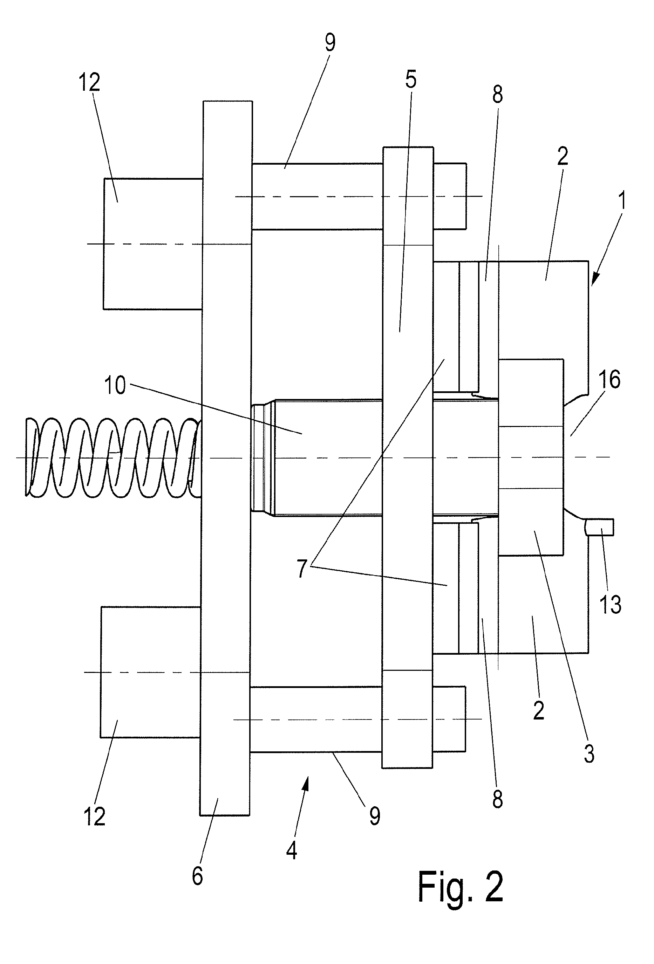

- Figur 2: den Teil nach Figur 1 in einer Draufsicht

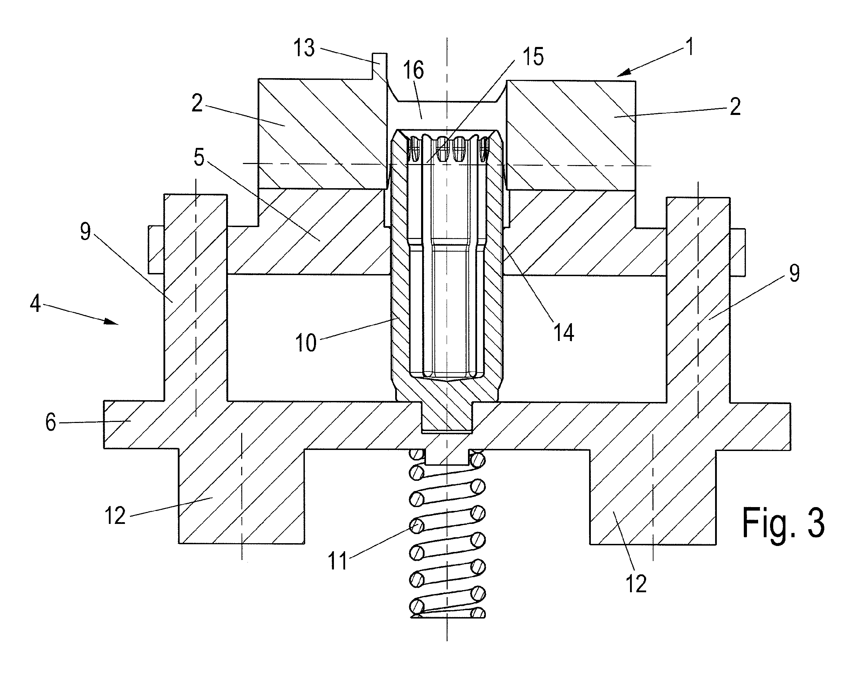

- Figur 3: einen Querschnitt durch den Teil nach Figur 2.

In den Figuren ist ein Teil einer pneumatisch oder elektromechanisch betätigbaren Scheibenbremse dargestellt, mit einer Brücke 4, die gemäß der Erfindung eine Brückenplatte 5 und eine Druckplatte 6 aufweist. An der Brückenplatte 5 stützt sich ein Bremshebel 1 ab, der mit einem Hebelarm 3 versehen ist, an den zur Betätigung ein nicht dargestellter Stößel eines Bremszylinders angreift. Ein endseitig am Hebelarm 3 angeschlossener Exzenter 2 liegt einerseits an einer Innenwand eines ebenfalls nicht gezeigten Bremssattels und andererseits an Widerlagern 7 der Brückenplatte 5 an. Hierzu ist an den Exzenter 2 eine Wälzkante 4 angeformt, die als Drehachse für den Bremshebel 1 fungiert.

Die Druckplatte 6 ist parallel zur Brückenplatte 5 angeordnet und mit zwei parallel und abständig zueinander verlaufenden Führungsholmen 9 versehen, die verschiebbar in der Brückenplatte 5 gelagert sind.

An der Druckplatte 6 ist ein Verstellelement 10 axial gesichert, jedoch drehbar befestigt, das mit einem Außengewinde in eine Gewindebohrung 14 der Brückenplatte 5 eingedreht ist und entsprechend einem Lüftspielausgleich derart verstellbar ist, dass sich die Druckplatte 6 und die Brückenplatte 5 im Sinne einer Aufspreizung relativ zueinander bewegen.

Alternativ kann die Druckplatte 6 mit einer Gewindebohrung versehen sein, so dass dann das Verstellelement 10 frei drehbar in der Brückenplatte 5 gelagert ist.

Da das Verstellelement 10 in den Bremshebel 1 hineinragt, weist dieser im Bereich seines Exzenters 2 eine Ausnehmung 16 auf, die, ebenso wie das Verstellelement 10, zentral angeordnet ist und in der das Verstellelement 10 einliegt.

Zur Betätigung, d.h. zur Verdrehung des Verstellelementes 10, das als Gewinderohr ausgebildet ist, ist darin ein nicht gezeigter Nachsteller verdrehsicher gehalten, der dazu mit einer Außenverzahnung in eine Innenverzahnung 15 des Verstellelementes 10 eingreift.

Andererseits korrespondiert der Nachsteller über beispielsweise eine Schaltgabel mit am Exzenter 2 angeformten Stiften 13, so dass bei Betätigung des Bremshebels 1 eine Verdrehung des Nachstellers und damit des Verstellelementes 10 erfolgt.

Prinzipiell ist diese Nachstellung in der DE 94 22 342 U1 beschrieben und dort als Stellspindel mit integriertem Nachsteller bezeichnet, wobei bei dieser bekannten Scheibenbremse zwei Stellspindeln, beidseitig des Bremshebels 1 positioniert sind. Die dabei notwendige axiale Verstellung des Nachstellers gegenüber dem Gewinderohr ist bei der Nachstellung gemäß der Erfindung nicht erforderlich.

An der dem Verstellelement 10 abgewandten Seite der Druckplatte 6, an der zwei Druckstücke 12 angeordnet sind, zur Korrespondenz mit einem Bremsbelag, ist eine an sich bekannte Druckfeder 11 angeordnet, die sich andererseits am Bremssattel oder einer Verschlussplatte des Bremssattels abstützt. Dabei dient die Druckfeder 11 der Rückstellung des Gesamtsystems, also der Druckplatte 6 und der Brückenplatte 5, wenn eine Bremsung gelöst wird.

### Bezugszeichenliste

- 1: Bremshebel
- 2: Exzenter
- 3: Hebelarm
- 4: Brücke
- 5: Brückenplatte
- 6: Druckplatte
- 7: Widerlager
- 8: Wälzkante
- 9: Führungsholm
- 10: Verstellelement
- 11: Druckfeder
- 12: Druckstück
- 13: Stift
- 14: Gewindebohrung
- 15: Innenverzahnung
- 16: Ausnehmung

## Patentansprüche

1. Scheibenbremse mit einer an einem Bremssattel angeordneten, einen sich an einer Brücke (4) abstützenden Bremshebel (1), mit einem Bremshebel (3) und einem Exzenter (2), aufweisenden Zuspanneinrichtung zum Andrücken eines Bremsbelages an eine Bremsscheibe, sowie einer durch den Bremshebel (1) betätigbaren Nachstelleinrichtung, mit der eine verschleißbedingte Änderung eines Lüftspiels zwischen dem Bremsbelag und der Bremsscheibe im Wesentlichen ausgleichbar ist, **dadurch gekennzeichnet, dass** die Brücke (4) eine Brückenplatte (5), an der der Bremshebel (1) anliegt, sowie eine mit dem Bremsbelag in Korrespondenz stehende, Druckstücke (12) zur Anlage am Bremsbelag tragende Druckplatte (6) aufweist, wobei mit einem Verstellelement (10) der Nachstelleinrichtung, das mit der Brückenplatte (5) und der Druckplatte (6) in Verbindung steht, entsprechend dem Lüftspielausgleich, die Druckplatte (6) in Zuspannrichtung relativ zur Brückenplatte (5), unter Nutzung zweier darin verschiebbar gelagerter, beidseitig des Verstellelementes (10) parallel dazu verlaufender Führungsholme (9) bewegbar ist.

2. Scheibenbremse nach Anspruch 1, **dadurch gekennzeichnet, dass** das Verstellelement (10) als Spindel ausgebildet ist, die einerseits gesichert, jedoch drehbar in der Druckplatte (6) und andererseits axial verstellbar in der Brückenplatte (5) gehalten ist.

3. Scheibenbremse nach Anspruch 1, **dadurch gekennzeichnet, dass** das Verstellelement (10) als Spindel ausgebildet ist, die einerseits gesichert, jedoch drehbar in der Brückenplatte (5) und andererseits axial verstellbar in der Druckplatte (6) gehalten ist.

4. Scheibenbremse nach einem der vorhergehenden Ansprüche, **dadurch gekennzeichnet, dass** das Verstellelement (10) aus einem Gewinderohr besteht, das in eine Gewindebohrung (14) der Brückenplatte (5) oder der Druckplatte (6) eingeschraubt ist.

5. Scheibenbremse nach einem der vorhergehenden Ansprüche, **dadurch gekennzeichnet, dass** das Verstellelement (10) zentral in der Brücke (4) angeordnet ist.

6. Scheibenbremse nach einem der vorhergehenden Ansprüche, **dadurch gekennzeichnet, dass** in dem Verstellelement (10) ein Nachsteller verdrehsicher gehalten ist, der mit dem Bremshebel (1) zur Verdrehung des Verstellelementes (10) in Korrespondenz steht.

7. Scheibenbremse nach einem der vorhergehenden Ansprüche, **dadurch gekennzeichnet, dass** der Exzenter (2) eine Ausnehmung (16) aufweist, in die das Verstellelement (10) bereichsweise eintaucht.

8. Scheibenbremse nach einem der vorhergehenden Ansprüche, **dadurch gekennzeichnet, dass** der Nachsteller verdrehsicher und verschiebefest im Verstellelement (10) positioniert ist.

## Claims

1. Disc brake, comprising a brake lever (1) located on a brake calliper and supported on a bridge (4), an application device having a brake lever (3) and an eccentric for pressing a brake pad against a brake disc, and an adjusting device actuated by the brake lever (1) for at least substantially compensating for a wear-related change in a clearance between the brake pad and the brake disc, **characterised in that** the bridge (4) comprises a bridge plate (5) against which the brake lever (1) bears and a pressure plate (6) in correspondence with the brake pad and supporting pressure pads (12) for bearing against the brake pad, wherein the pressure plate (6) can be moved by means of an adjusting element (10) of the adjusting device, which is connected to the bridge plate (5) and the pressure plate (6), in accordance with the clearance compensation relative to the bridge plate (5) in the application direction while using two guide tubes (9) displaceably mounted therein and extending parallel thereto on both sides of the adjusting element (10).

2. Disc brake according to claim 1, **characterised in that** the adjusting element (10) is designed as a spindle, one end of which is rotatably secured in the pressure plate (6) and the other end of which is held in the bridge plate (5) in an axially adjustable manner.

3. Disc brake according to claim 1, **characterised in that** the adjusting element (10) is designed as a spindle, one end of which is rotatably secured in the bridge plate (5) and the other end of which is held in the pressure plate (6) in an axially adjustable manner.

4. Disc brake according to any of the preceding claims, **characterised in that** the adjusting element (10) consists of a threaded tube screwed into a threaded hole (14) of the bridge plate (5) or of the pressure plate (6).

5. Disc brake according to any of the preceding claims, **characterised in that** the adjusting element (10) is located centrally in the bridge (4).

6. Disc brake according to any of the preceding claims, **characterised in that** an adjuster in correspondence with the brake lever (1) for rotating the adjusting element (10) is non-rotatably held in the adjusting element (10).

7. Disc brake according to any of the preceding claims, **characterised in that** the eccentric (2) has a recess (16) into which a section of the adjusting element (10) dips.

8. Disc brake according to any of the preceding claims, **characterised in that** the adjuster is non-rotatably and non-displaceably positioned in the adjusting element (10).

## Revendications

1. Frein à disque, comprenant un levier (1) de frein disposé sur un étrier de frein et s'appuyant sur un pontet (4), un dispositif de serrage ayant un levier (3) de frein et un excentrique (2) pour presser une garniture de frein sur un disque de frein, ainsi qu'un dispositif de rattrapage de jeu, qui peut être actionné par le levier (1) de frein et par lequel une variation due à l'usure d'un intervalle d'air entre la garniture de frein et le disque de frein peut être sensiblement compensée, **caractérisé en ce que** le pontet (4) a un plateau (5), auquel s'applique le levier (1) de frein, ainsi qu'un plateau (6) de pression en correspondance avec la garniture de frein et portant des pièces (12) d'application d'une pression pour application à la garniture de frein, dans lequel, par un élément (10) de réglage du dispositif de rattrapage de jeu, qui est en liaison avec le plateau (5) de pontet et avec le plateau (6) d'application d'une pression, conformément à la compensation de l'intervalle d'air, le plateau (6) de pression peut être déplacé dans le sens du serrage par rapport au plateau (5) du pontet en utilisant deux colonnes (9) de guidage montées coulissantes et s'étendant des deux côtés de l'élément (10) de réglage parallèlement à celui-ci.

2. Frein à disque suivant la revendication 1, **caractérisé en ce que** l'élément (10) de réglage est constitué sous la forme d'une broche, qui est maintenue, d'une part, en étant fixée, mais en pouvant tourner, dans le plateau (6) de pression et, d'autre part, en pouvant être déplacée axialement dans le plateau (6) de pontet.

3. Frein à disque suivant la revendication 1, **caractérisé en ce que** l'élément (10) de réglage est constitué sous la forme d'une broche, qui est maintenue, d'une part, en étant fixée, mais toutefois en pouvant tourner, dans le plateau (5) de pontet et, d'autre part, en pouvant coulisser axialement dans le plateau (6) de pression.

4. Frein à disque suivant l'une des revendications précédentes, **caractérisé en ce que** l'élément (10) de réglage est constitué d'un tube fileté, qui se visse dans un taraudage (14) du plateau (5) de pontet ou du plateau (6) de pression.

5. Frein à disque suivant l'une des revendications précédentes, **caractérisé en ce que** l'élément (10) de réglage est disposé centralement dans le pontet (4).

6. Frein à disque suivant l'une des revendications précédentes, **caractérisé en ce que**, dans l'élément (10) de réglage, est maintenu un rattrapeur de jeu, qui est en correspondance avec le levier (1) de frein pour la torsion de l'élément (10) de réglage.

7. Frein à disque suivant l'une des revendications précédentes, **caractérisé en ce que** l'excentrique (2) a un évidement (16), dans lequel pénètre par endroit l'élément (10) de réglage.

8. Frein à disque suivant l'une des revendications précédentes, **caractérisé en ce que** le rattrapeur de jeu est placé, sans possibilité de torsion et d'une manière fixe en coulissement, dans l'élément (10) de réglage.
